# EUROPEAN PATENT APPLICATION

(11) **EP 4 836 058 A1**
(43) Date of publication of application: **04.11.2026**
(21) Application number: 26175284.4
(22) Date of filing: 29.04.2026
(51) Int. Cl.: H01M 10/0567, H01M 10/0525, H01M 10/0569

(54) **ELECTROLYTE FOR IMPROVING LOW TEMPERATURE PERFORMANCE OF BATTERIES AND FUNCTIONAL ADDITIVES THEREOF**

(30) Priority: 29.04.2025 CN 202510564733
(71) Applicant: Techtronic Cordless GP, Anderson, SC 29621 (US)
(72) Inventor: YAN, Cheng Jie, Dongguan City (CN); XU, Gang, Dongguan City (CN)
(74) Representative: Parker, Andrew James

(57) **Abstract**

The present invention relates to an electrolyte for improving battery low-temperature performance and a functional additive thereof, and a lithium ion battery containing the electrolyte.

## Description

### Technical Field

The present invention relates to the technical field of batteries, in particular to an electrolyte and a functional additive thereof, and a lithium ion battery containing the electrolyte.

### Background Art

Ever since their commercialization, lithium ion batteries have been widely used in the field of traction batteries, owing to their high energy density, high power density, long cycle life, environmental friendliness and other advantages. However, the performance of lithium batteries is significantly affected by temperature; at low temperatures in particular, their low-temperature discharge and cycle performance will fall significantly, and this severely restricts their use in low-temperature environments. Thus, the question of how to improve the performance of lithium batteries at low temperatures has become an important focus of research in the technical field of battery manufacture.

Although existing technical solutions have improved the low-temperature performance of lithium batteries to a certain extent, they still have some problems and drawbacks. Firstly, in existing solutions, it is often necessary to subject all of the component parts of the battery to comprehensive improvement; this increases both the cost and complexity of battery manufacture. Secondly, while improving battery low-temperature performance, existing solutions might have a negative impact on other properties, such as battery capacity or cycle life. Finally, the effectiveness of existing solutions in improving battery low-temperature performance is limited; at extremely low temperatures in particular, battery performance is still unable to meet the requirements of real applications.

As an important component part of a lithium ion battery, electrolyte has a huge influence on the performance of the lithium ion battery. The addition of a small amount of an electrolyte functional additive to the electrolyte, to form a stable protective film on the electrode surfaces, is the most economical and effective strategy for improving electrode stability and realizing a highly stable lithium ion battery with high specific energy. At present, several types of functional additive have been reported to regulate the protective film on the surface of the positive electrode or negative electrode, avoiding decomposition of electrolyte through oxidation and reduction while protecting the electrodes. However, reports of success with electrolytes and functional additives thereof that are able to effectively improve battery low-temperature performance are still rare.

### Summary of the invention

In response to the technical problem of significant impairment of lithium battery performance at low temperatures, which persists in the technical field of batteries at present, an objective of the present invention is to provide an electrolyte capable of significantly improving battery low-temperature performance and a functional additive thereof.

To achieve the above objective and other related objectives, a first aspect of the present invention provides an electrolyte, comprising a lithium salt, an organic solvent, a first functional additive and a second functional additive;
wherein the first functional additive is selected from vinylene carbonate (VC), vinyl ethylene carbonate (VEC), ethylene sulfate (DTD), 1,3-propane sultone (PS), 1,4-butane sultone (MMDS), 1,3-propene sultone (PST), tris(trimethylsilyl)borate (TMSP), tris(trimethylsilyl)phosphite (TMSPi), biphenyl (BP), fluorobenzene (FB), acetonitrile (SN), butyronitrile (AND) and mixtures thereof;
the second functional additive is a functional additive with the structure shown in formula (I): 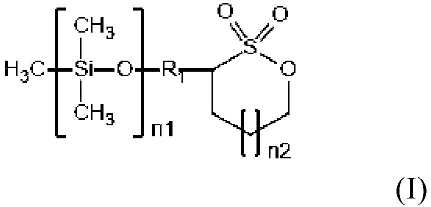
where R₁ is selected from C₀₋₅ alkylene; n1 is selected from integers 1 - 8; and n2 is selected from integers 0 - 5.

A second aspect of the present invention provides a lithium ion battery, comprising a positive electrode, a negative electrode, a separator arranged between and separating the positive electrode and the negative electrode, and the electrolyte described in the first aspect of the present invention.

A third aspect of the present invention provides a compound with the structure shown in formula (I): 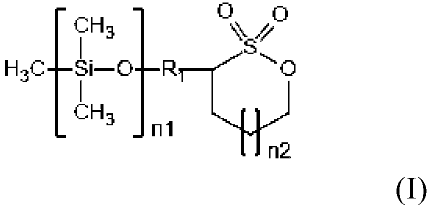 where R₁ is selected from C₀₋₅ alkylene; n1 is selected from integers 1 - 8; and n2 is selected from integers 0 - 5. The compound may be used as a functional additive in an electrolyte that improves battery low-temperature performance.

A fourth aspect of the present invention provides a use of the compound described in the third aspect of the present invention for improving battery low-temperature performance.

Compared with the prior art, the present invention has the following beneficial effects:
When used as a functional additive in an electrolyte, the compound provided in the present invention can induce lithium salt decomposition and thus has good lithium conductivity, effectively reducing the impedance of the SEI film on the negative electrode. The multiple siloxane units in the specific structure shown in formula (I) of the present invention facilitate more uniform film formation; the cyclic sulfonate unit will form a uniform and stable SEI film on the negative electrode, can effectively reduce gas generation during storage, and results in good ion conductivity. Through the synergy of the cyclic sulfonate unit and the siloxane units in the skeletal structure, a uniform and stable low-impedance negative electrode protective film with excellent lithium conductivity and thermal stability can be formed on the negative electrode surface. This protective film can effectively protect and isolate the negative electrode from contact with the electrolyte, preventing side reactions from occurring while also allowing lithium ions to pass through freely, effectively reducing resistance to lithium ion migration, so that the battery has excellent low-temperature discharge capability.

In addition, the formulation and manufacturing process of the electrolyte of the present invention are simple with low costs, facilitating large-scale production. This is likewise in stark contrast to the problem in the prior art of electrolytes having complex formulation and manufacturing processes and high costs.

### Detailed Description of Embodiments

Endpoints and any values of ranges disclosed herein are not limited to the precise ranges or values; these ranges or values should be understood to include values close to these ranges or values. In the case of numerical ranges, one or more new numerical range can be obtained by combining endpoint values of ranges, endpoint values and individual point values of ranges, and individual point values, and these numerical ranges should be regarded as being specifically disclosed herein.

In addition, a "range" disclosed herein is defined in the form of a lower limit and an upper limit, a given range being defined by choosing a lower limit and an upper limit, the chosen lower limit and upper limit defining the boundaries of a particular range. Ranges defined in this way may or may not include end values, and may be combined in any way, i.e. any lower limit may be combined with any upper limit to form a range. For example, if the ranges 60 - 120 and 80 - 110 are listed for a specific parameter, ranges understood to be 60 - 110 and 80 - 120 are also anticipated. In addition, if the minimum range values listed are 1 and 2, and if the maximum range values 3, 4 and 5 are listed, then all of the following ranges may be anticipated: 1 - 3, 1 - 4, 1 - 5, 2 - 3, 2 - 4 and 2 - 5. In the present application, unless stated otherwise, the numerical range "a - b" represents an abbreviation of any combination of real numbers between a and b, where a and b are both real numbers. For example, the numerical range "0 - 5" means that all real numbers in the range "0 - 5" have already been fully listed herein; "0 - 5" is merely an abbreviation of these numerical combinations. In addition, when a parameter is expressed as an integer ≥ 2, this is equivalent to disclosing that the parameter is for example the integer 2, 3, 4, 5, 6, 7, 8, 9, 10, 11 or 12, etc.

The first aspect of the present invention provides an electrolyte, comprising a lithium salt, an organic solvent, a first functional additive and a second functional additive;
the second functional additive is a functional additive with the structure shown in formula (I): 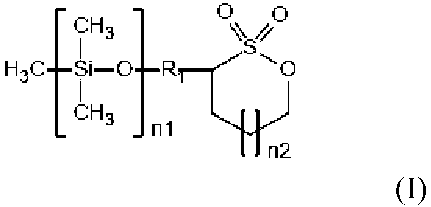
where R₁ is selected from C₀₋₅ alkylene; n1 is selected from integers 1 - 8; and n2 is selected from integers 0 - 5.

For R₁ selected from C₀₋₅ alkylene, the C₀₋₅ alkylene may be selected from, for example, a bond (i.e. C₀ alkylene), -CH₂-(C₁ alkylene or methylene), -CH₂CH₂-(C₂ alkylene or ethylene), -CH₂CH₂CH₂-(C₃ alkylene or propylene), -CH₂CH₂CH₂CH₂-(C₄ alkylene or butylene) and -CH₂CH₂CH₂CH₂CH₂-(C₅ alkylene or pentylene).

In an embodiment, R₁ is preferably selected from C₁₋₃ alkylene, for example C₂₋₃ alkylene.

For n1 selected from integers 1 - 8, n1 may be 1, 2, 3, 4, 5, 6, 7 or 8.

In an embodiment, n1 is preferably selected from integers 1 - 4.

For n2 selected from integers 0 - 5, n2 may be 0, 1, 2, 3, 4 or 5. It should be explained that when n2 is 0, this means that the -CH₂- unit is not present, and the corresponding cyclic sulfonate unit is a five-membered ring. In an embodiment, n2 is preferably selected from integers 0 - 3.

In an embodiment, the ratio of n1 to n2 is preferably about 1 : 1 to 4 : 1, for example, about 1 : 1, about 2 : 1, about 3 : 1 or about 4 : 1.

In an embodiment, the second functional additive is selected from: 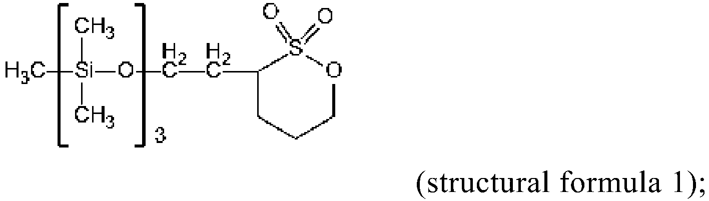 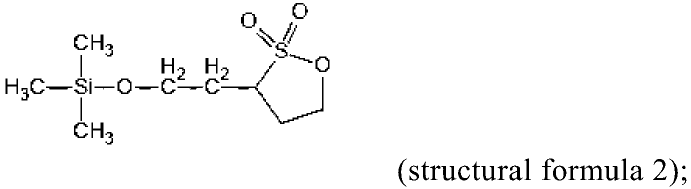 and/or

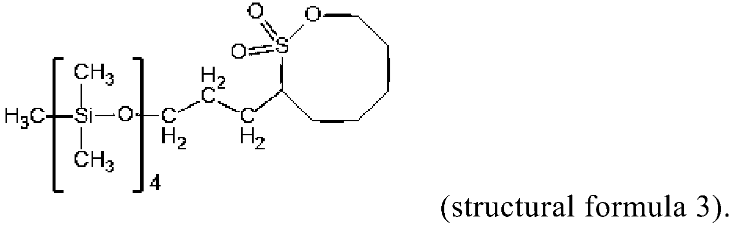

In an embodiment, the content of the second functional additive is 0.01 - 6 wt%, based on the total weight of electrolyte. For example, the content of the second functional additive may be 0.1 - 6 wt%, 0.5 - 6 wt%, 1 - 6 wt%, 2 - 5 wt%, 2 - 4 wt%, 3 - 4 wt%, 3 wt% or 4 wt%. Preferably, the content of the second functional additive is 2 - 4 wt%, based on the total weight of electrolyte.

Without wishing to be limited to a particular theory, it was discovered in the present invention that a 2 - 4 wt% (preferably 3 - 4 wt%) content of the second functional additive can further improve battery low-temperature performance.

In an embodiment, the first functional additive is selected from vinylene carbonate (VC), vinyl ethylene carbonate (VEC), ethylene sulfate (DTD), 1,3-propane sultone (PS), 1,4-butane sultone (MMDS), 1,3-propene sultone (PST), tris(trimethylsilyl)borate (TMSP), tris(trimethylsilyl)phosphite (TMSPi), biphenyl (BP), fluorobenzene (FB), acetonitrile (SN), butyronitrile (AND) and mixtures thereof. Preferably, the first functional additive is selected from vinylene carbonate (VC), acetonitrile (SN) and/or 1,4-butane sultone (MMDS).

In an embodiment, the content of the first functional additive is 0.01 - 6 wt%, based on the total weight of electrolyte. For example, the content of the first functional additive may be 0.1 - 6 wt%, 0.5 - 6 wt%, 1 - 6 wt%, 2 - 5 wt%, 2 - 4 wt%, 2.5 - 3.5 wt% or 3 wt%. Preferably, the content of the first functional additive is 1 - 2 wt%, based on the total weight of electrolyte.

In an embodiment, the lithium salt is selected from lithium hexafluorophosphate (LiPF₆), lithium tetrafluoroborate (LiBF₄₎), lithium difluorophosphate (LiPO₂F₂), lithium bis(oxalato)borate (LiBOB), lithium difluoro(oxalato)borate (LiODFB), lithium bis(trifluoromethanesulfonyl)imide (LiTFSI), lithium bis(fluorosulfonyl)imide (LiFSI) and mixtures thereof. Preferably, the lithium salt is selected from lithium hexafluorophosphate (LiPF₆), lithium bis(fluorosulfonyl)imide (LiFSI) and mixtures thereof.

In an embodiment, the content of the lithium salt is 5 - 15 wt%, based on the total weight of electrolyte. For example, the content of the lithium salt may be 6 - 15 wt%, 7 - 15 wt%, 8 - 15 wt%, 9 - 15 wt%, 10 - 15 wt%, 6 - 14 wt%, 6 - 13 wt%, 6 - 12 wt%, 6 - 11 wt%, 6 - 10 wt%, 8 - 12 wt%, 9 - 11 wt% or 10wt%. Preferably, the content of the lithium salt is 8 - 12 wt%, based on the total weight of electrolyte.

In an embodiment, the organic solvent is selected from ethylene carbonate (EC), propylene carbonate (PC), fluoroethylene carbonate (FEC), dimethyl carbonate (DMC), diethyl carbonate (DEC), ethyl methyl carbonate (EMC), methyl formate (MA), ethyl acetate (EA), methyl propionate (MP), ethyl propionate (EP), butyl propionate (BP), ethyl butyrate (EB), trimethylphosphate (TMP), triethyl phosphate (TEP), triphenylphosphate (TBP), ether solvents and mixtures thereof. Preferably, the organic solvent is selected from ethylene carbonate (EC), fluoroethylene carbonate (FEC), ethyl methyl carbonate (EMC) and/or dimethyl carbonate (DMC).

In an embodiment, the content of the organic solvent is 70 - 90 wt%, based on the total weight of electrolyte. For example, the content of the organic solvent may be 72 - 88 wt%, 74 - 86 wt%, 76 - 84 wt%, 78 - 82 wt% or 80%. Preferably, the content of the organic solvent is 76 - 84 wt%, based on the total weight of electrolyte.

In an embodiment, the sum of the contents of the lithium salt, the organic solvent, the first functional additive and the second functional additive is 100%, based on the total weight of electrolyte. That is, the electrolyte no longer contains remaining components.

In an embodiment, the sum of the contents of the lithium salt, the organic solvent, the first functional additive and the second functional additive is less than 100%, based on the total weight of electrolyte. That is, the electrolyte may also contain one or more remaining component, in order to realize a corresponding additional function.

The use of the lithium salt, the organic solvent and the first functional additive of the types and/or in the amounts stated in the present invention can better cooperate with the second functional additive provided in the present invention, further ensuring that the electrolyte has the excellent effect described in the present invention.

In an embodiment, the electrolyte is obtained by adding the lithium salt to the organic solvent, stirring fully to dissolve, then adding the first functional additive and the second functional additive, and fully mixing and stirring.

In an embodiment, the electrolyte is prepared in an argon atmosphere, for example in a glove box filled with argon (typically controlling the oxygen content at ≤ 5 ppm, and the water content at ≤ 10 ppm).

The second aspect of the present invention provides a lithium ion battery, comprising a positive electrode, a negative electrode, a separator arranged between and separating the positive electrode and the negative electrode, and the electrolyte described in the present invention.

In an embodiment, the positive electrode comprises a positive electrode current collector, and a positive electrode active substance layer provided on at least one surface of the positive electrode current collector. The positive electrode current collector may be a metal foil sheet or a composite current collector. For example, aluminum foil may be used as the metal foil sheet. The composite current collector may comprise a polymer material base layer, and a metal layer formed on at least one surface of the polymer material base layer. The positive electrode active substance layer comprises a positive electrode active material, and may further comprise a conductive agent and a binder. The positive electrode active material may be selected from one of, or a combination of more than one of, lithium cobalt oxide, lithium manganese oxide, lithium nickel manganese oxide, lithium nickel cobalt manganese oxide, lithium nickel cobalt aluminum oxide, lithium iron phosphate and lithium manganese iron phosphate; preferably, the positive electrode active material is selected from lithium nickel cobalt manganese oxide, wherein 0.5 ≤ mole fraction of nickel < 1. Those skilled in the art may select a conductive agent and a binder which are suitable for lithium ion batteries in the art. The conductive agent may for example comprise at least one of superconductive carbon, acetylene black, carbon black, ketjenblack, carbon dots, carbon nanotubes, graphene and carbon nanofibers. The binder may for example comprise at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer and fluorinated acrylate resins.

In an embodiment, the positive electrode may be prepared in the following way: the abovementioned components used to prepare the positive electrode, for example a positive electrode material, a conductive agent, a binder and any other component, are dispersed in a solvent (e.g. N-methylpyrrolidone) to form a positive electrode slurry; the positive electrode slurry is applied to a positive electrode current collector, and process steps including oven-drying and cold pressing are performed to obtain the positive electrode.

In an embodiment, the negative electrode comprises a negative electrode current collector, and a negative electrode active substance layer provided on at least one surface of the negative electrode current collector. The negative electrode current collector may be a metal foil sheet or a composite current collector. For example, copper foil may be used as the metal foil sheet. The composite current collector may comprise a polymer material base layer, and a metal layer formed on at least one surface of the polymer material substrate. The negative electrode active substance layer comprises a negative electrode active material, and may further comprise a plasticizer, a conductive agent and a binder. The negative electrode active material may be selected from one of, or a combination of more than one of, silicon/carbon, silicon oxide, natural graphite, artificial graphite, lithium titanate, amorphous carbon and lithium metal. Those skilled in the art may select a plasticizer, a conductive agent and a binder which are suitable for lithium ion batteries in the art. The conductive agent may for example be selected from at least one of superconductive carbon, acetylene black, carbon black, ketjenblack, carbon dots, carbon nanotubes, graphene and carbon nanofibres. The binder may for example be selected from at least one of styrene-butadiene rubber (SBR), polyacrylic acid (PAA), sodium polyacrylate (PAAS), polyacrylamide (PAM), polyvinyl alcohol (PVA), sodium alginate (SA), poly(methacrylic acid) (PMAA), carboxymethyl chitosan (CMCS) and sodium carboxymethylcellulose (CMC-Na).

In an embodiment, the negative electrode may be prepared in the following way: the abovementioned components used to prepare the negative electrode, for example a negative electrode material, a conductive agent, a binder and any other component, are dispersed in a solvent (e.g. deionized water) to form a negative electrode slurry; the negative electrode slurry is applied to a negative electrode current collector, and process steps including oven-drying and cold pressing are performed to obtain the negative electrode.

In an embodiment, a common material in the art with good stability and a porous structure may also be chosen for the separator. For example, polyethylene, polypropylene, polyvinylidene fluoride and polyethylene terephthalate may be chosen.

The present invention further relates to a battery module containing the lithium ion battery; and a battery pack containing one or more said battery module.

The third aspect of the present invention provides a compound with the structure shown in formula (I): 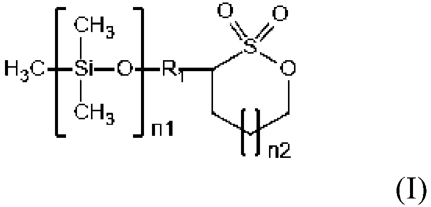 where R₁ is selected from C₀₋₅ alkylene; n1 is selected from integers 1 - 8; and n2 is selected from integers 0 - 5.

In an embodiment, the compound is used as a functional additive in an electrolyte that improves battery low-temperature performance.

The fourth aspect of the present invention provides a use of the compound described in the present invention for improving battery low-temperature performance.

In an embodiment, in the abovementioned use, the compound is used as a functional additive in an electrolyte.

In an embodiment, improving battery low-temperature performance means increasing cycle life in low-temperature cycles, and/or increasing capacity retention in low-temperature discharge.

A fifth aspect of the present invention provides a method for preparing the compound with the structure shown in formula (I), the method comprising the following steps:
Step 1: dissolving trimethylsilyl chloride (5 - 10 mmol) and trimethyl borate (5 - 10 mmol) in a solvent, and slowly adding triethylamine (6 - 12 mmol) dropwise to react;
step 2: removing triethylamine hydrochloride by filtration, and removing the solvent by vacuum distillation to obtain the intermediate tris(trimethylsilyl)borate (TMSP);
step 3: heating the TMSP (5 mmol) with a cyclic sulfonic acid ester (5 mmol) in a solvent to react, and purifying by column chromatography to obtain the compound with the structure shown in formula (I).

In an embodiment, the solvent in step 1 is dry tetrahydrofuran (THF); the dropwise addition of triethylamine is carried out under argon protection at 0°C, and/or the reaction time is 24 - 48 hours.

In an embodiment, the solvent in step 3 is toluene; the heating temperature is to 80°C; and/or the reaction time is 12 hours.

Beneficial effects of the present invention are further described below in conjunction with Examples. To clarify the invention objective, technical solution and beneficial technical effects of the present invention, the present invention is described in further detail below in conjunction with Examples. However, it will be understood that the Examples of the present invention are merely intended to explain the present invention without limiting it, and the Examples of the present invention are not limited to those presented herein. In the Examples, where specific experimental conditions or operation conditions are not noted, conventional conditions are followed for production, or conditions recommended by the material supplier are followed for production.

In addition, it will be understood that one or more method steps mentioned in the present invention do not rule out the possibility that other method steps are present before or after the stated combined steps or that other method steps are inserted between these explicitly mentioned steps, unless otherwise stated. It will also be understood that a combined connection relationship between one or more devices/electrical apparatuses mentioned in the present invention does not rule out the possibility that other devices/apparatuses are present before or after the stated combined devices/apparatuses or that other devices/apparatuses are inserted between these explicitly mentioned two devices/apparatuses, unless stated otherwise. Furthermore, unless stated otherwise, the numbers applied to the method steps are merely a tool of convenience for distinguishing between method steps, and are not intended to limit the order of arrangement of the method steps or define the scope of implementation of the present invention, and changes or adjustments to the relationships therebetween should also be regarded as within the scope of implementation of the present invention if the technical content is not substantively altered.

In the Examples below, all of the reagents, materials and instruments used are commercially available unless otherwise stated.

### Examples

### Examples 1 - 21 and Comparative Example 1

**Electrolyte preparation:** Ethylene carbonate (EC), fluoroethylene carbonate (FEC), ethyl methyl carbonate (EMC) and dimethyl carbonate (DMC) were mixed evenly and continuously stirred in corresponding volume ratios (see Table 1) in a glove box filled with argon (oxygen content ≤ 5 ppm, water content ≤ 10 ppm); a non-aqueous solvent made up 80% of the total mass of electrolyte. Lithium hexafluorophosphate (LiPF₆) and lithium bis(fluorosulfonyl)imide (LiFSI) were then added to the mixed solution and fully stirred to dissolve, so that the contents thereof were respectively 10% and 5% of the total mass of electrolyte. Once the mixed solution had returned to room temperature, a first functional additive of a corresponding type and content and a second functional additive with a corresponding structure were sequentially added, followed by full stirring to mix evenly. In this way, the electrolytes of Examples 1 - 9 and Comparative Examples 1 - 4 were obtained.

**Table 1**

| Example | Lithium salt, Wt% | | Solvent (volume ratio) | | | | First functional additive, Wt% | | | Second functional additive, Wt% | | |
|---|---|---|---|---|---|---|---|---|---|---|---|---|
| | LiPF₆ | LiFSI | EC | FEC | EMC | DMC | VC | SN | MMDS | Structural formula 1 | Structural formula 2 | Structural formula 3 |
| 1 | 10 | 5 | 15 | 10 | 25 | 50 | 1 | 0.5 | 0.5 | 0.1% | | |
| 2 | 10 | 5 | 15 | 10 | 25 | 50 | 1 | 0.5 | 0.5 | 1% | | |
| 3 | 10 | 5 | 15 | 10 | 25 | 50 | 1 | 0.5 | 0.5 | 2% | | |
| 4 | 10 | 5 | 15 | 10 | 25 | 50 | 1 | 0.5 | 0.5 | 3% | | |
| 5 | 10 | 5 | 15 | 10 | 25 | 50 | 1 | 0.5 | 0.5 | 4% | | |
| 6 | 10 | 5 | 15 | 10 | 25 | 50 | 1 | 0.5 | 0.5 | 6% | | |
| 7 | 10 | 5 | 15 | 10 | 25 | 50 | 1 | 0.5 | 0.5 | | 0.1% | |
| 8 | 10 | 5 | 15 | 10 | 25 | 50 | 1 | 0.5 | 0.5 | | 1% | |
| 9 | 10 | 5 | 15 | 10 | 25 | 50 | 1 | 0.5 | 0.5 | | 2% | |
| 10 | 10 | 5 | 15 | 10 | 25 | 50 | 1 | 0.5 | 0.5 | | 3% | |
| 11 | 10 | 5 | 15 | 10 | 25 | 50 | 1 | 0.5 | 0.5 | | 4% | |
| 12 | 10 | 5 | 15 | 10 | 25 | 50 | 1 | 0.5 | 0.5 | | 6% | |
| 13 | 10 | 5 | 15 | 10 | 25 | 50 | 1 | 0.5 | 0.5 | | | 0.1% |
| 14 | 10 | 5 | 15 | 10 | 25 | 50 | 1 | 0.5 | 0.5 | | | 1% |
| 15 | 10 | 5 | 15 | 10 | 25 | 50 | 1 | 0.5 | 0.5 | | | 2% |
| 16 | 10 | 5 | 15 | 10 | 25 | 50 | 1 | 0.5 | 0.5 | | | 3% |
| 17 | 10 | 5 | 15 | 10 | 25 | 50 | 1 | 0.5 | 0.5 | | | 4% |
| 18 | 10 | 5 | 15 | 10 | 25 | 50 | 1 | 0.5 | 0.5 | | | 6% |
| 19 | 15 | 0 | 15 | 10 | 25 | 50 | 1 | 0.5 | 0.5 | 3% | | |
| 20 | 10 | 5 | 20 | 10 | 15 | 55 | 1 | 0.5 | 0.5 | 3% | | |
| 21 | 10 | 5 | 15 | 10 | 25 | 50 | 1 | 0 | 0.5 | 3% | | |
| Comparative Example 1 | 10 | 5 | 15 | 10 | 25 | 50 | 1 | 0.5 | 0.5 | 0 | 0 | 0 |

**Battery preparation steps:** A suitable amount of the prepared electrolyte was injected into a pouch battery with a design capacity of 4.0 Ah, and vacuum packaging was performed. The positive electrode of the pouch battery was NCM; the negative electrode was an artificial graphite and silicon oxide negative electrode. The battery then underwent process steps including storage, activation, ageing and capacity grading, thus completing the preparation process.

### Performance test experiments

**1) -20°C, 0.2C capacity retention:** The battery to be tested was first cycled at 1C/1C at 25°C for 3 cycles, then cycled at 0.2C/0.2C for 3 cycles, and capacity determination was performed. The battery to be tested was then left to stand in a -10°C environment for 3 hours; when the battery had reached the target temperature, it was discharged to cutoff voltage at 0.2C0, C0 being the mean value of capacity determined after three cycles. Capacity retention was calculated according to the discharge capacity at this temperature.
**2) -10°C, 1C cycle performance test:** The activated battery was placed in a -20°C environment, and charged and discharged to cutoff voltage at 1C/0.33C constant current to perform low-temperature cycling. Capacity retention for each cycle was calculated; when the capacity retention was lower than 80%, the current number of cycles was recorded.

The test results are shown in Table 2 below.

**Table 2**

| Group | Low-temperature cycle/-10°C | Low-temperature discharge/-20°C |
|---|---|---|
| | Cycle life/cycles @ 80% | Discharge capacity retention |
| 1 | 230 | 32% |
| 2 | 228 | 30% |
| 3 | 243 | 39% |
| 4 | 245 | 41% |
| 5 | 247 | 43% |
| 6 | 225 | 35% |
| 7 | 210 | 36% |
| 8 | 214 | 35% |
| 9 | 254 | 47% |
| 10 | 260 | 48% |
| 11 | 255 | 49% |
| 12 | 235 | 39% |
| 13 | 224 | 29% |
| 14 | 222 | 31% |
| 15 | 268 | 58% |
| 16 | 278 | 56% |
| 17 | 277 | 59% |
| 18 | 246 | 38% |
| 19 | 240 | 44% |
| 20 | 255 | 40% |
| 21 | 245 | 45% |
| Comparative Example 1 | 120 | 28% |

As can be seen from the above results, compared with Comparative Example 1, the use of the solution of the present invention enables a significant improvement in the low-temperature cycle life and low-temperature discharge capacity retention of the battery, thereby achieving a significant improvement in battery low-temperature performance. In addition, a 2 - 4 wt% (preferably 3 - 4 wt%) content of the second functional additive can further improve the battery low-temperature performance. In addition, when the compound with structural formula 3 is chosen as the second functional additive, the battery low-temperature performance achieved is superior overall to that achieved by the compounds with structural formula 1 and structural formula 2.

Preferred embodiments of the present invention have been described in detail above, but the present invention is not limited to this. Various simple changes can be made to the technical solution of the present invention within the scope of the technical concept thereof, including combining various technical features in any other suitable manner. These simple changes and combinations should likewise be regarded as content disclosed by the present invention, and are all within the scope of protection thereof.

## Claims

1. An electrolyte, comprising a lithium salt, an organic solvent, a first functional additive and a second functional additive;
wherein the first functional additive is selected from vinylene carbonate (VC), vinyl ethylene carbonate (VEC), ethylene sulfate (DTD), 1,3-propane sultone (PS), 1,4-butane sultone (MMDS), 1,3-propene sultone (PST), tris(trimethylsilyl)borate (TMSP), tris(trimethylsilyl)phosphite (TMSPi), biphenyl (BP), fluorobenzene (FB), acetonitrile (SN), butyronitrile (AND) and mixtures thereof;
the second functional additive is a functional additive with the structure shown in formula (I): 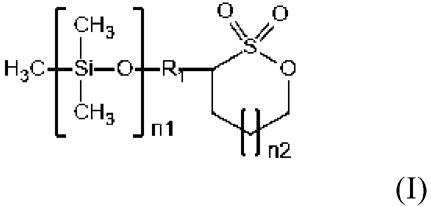
where R₁ is selected from C₀₋₅ alkylene; n1 is selected from integers 1 - 8; and n2 is selected from integers 0 - 5.

2. The electrolyte as claimed in claim 1, wherein R₁ is selected from C₁₋₃ alkylene; n1 is selected from integers 1 - 4; and/or n2 is selected from integers 0 - 3.

3. The electrolyte as claimed in claim 1 or 2, wherein the ratio of n1 to n2 is about 1 : 1 - 4 : 1.

4. The electrolyte as claimed in any one of claims 1 - 3, wherein the second functional additive is selected from: 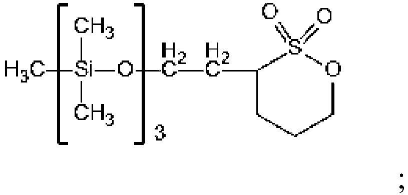 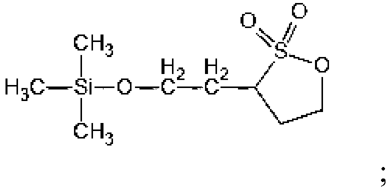 and/or

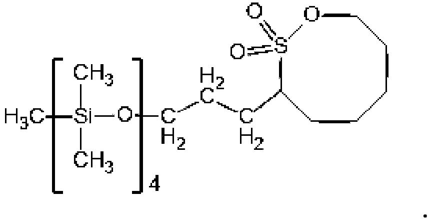

5. The electrolyte as claimed in any one of claims 1 - 4, wherein the content of the second functional additive is 0.01 - 6 wt%, based on the total weight of electrolyte- and/or, wherein the content of the second functional additive is 2 - 4 wt%, based on the total weight of electrolyte.

6. The electrolyte as claimed in any one of claims 1 - 5, wherein the lithium salt is selected from lithium hexafluorophosphate (LiPF₆), lithium tetrafluoroborate (LiBF₄₎), lithium difluorophosphate (LiPO₂F₂), lithium bis(oxalato)borate (LiBOB), lithium difluoro(oxalato)borate (LiODFB), lithium bis(trifluoromethanesulfonyl)imide (LiTFSI), lithium bis(fluorosulfonyl)imide (LiFSI) and mixtures thereof.

7. The electrolyte as claimed in any one of claims 1 - 6, wherein the content of the lithium salt is 5 - 15 wt%, based on the total weight of electrolyte and/or, wherein the content of the lithium salt is 8 - 12 wt%, based on the total weight of electrolyte.

8. The electrolyte as claimed in any one of claims 1 - 7, wherein the organic solvent is selected from ethylene carbonate (EC), propylene carbonate (PC), fluoroethylene carbonate (FEC), dimethyl carbonate (DMC), diethyl carbonate (DEC), ethyl methyl carbonate (EMC), methyl formate (MA), ethyl acetate (EA), methyl propionate (MP), ethyl propionate (EP), butyl propionate (BP), ethyl butyrate (EB), trimethylphosphate (TMP), triethyl phosphate (TEP), triphenylphosphate (TBP), ether solvents and mixtures thereof.

9. The electrolyte as claimed in any one of claims 1 - 8, wherein the content of the organic solvent is 70 - 90 wt%, based on the total weight of electrolyte.

10. The electrolyte as claimed in any one of claims 1 - 9, wherein the content of the first functional additive is 0.01 - 6 wt%, based on the total weight of electrolyte and/or, wherein the content of the first functional additive is 1 - 2 wt%, based on the total weight of electrolyte.

11. A lithium ion battery, comprising a positive electrode, a negative electrode, a separator arranged between and separating the positive electrode and the negative electrode, and the electrolyte as claimed in any one of claims 1 - 13, wherein preferably the negative electrode comprises a negative electrode active material, which is selected from one of, or a combination of more than one of, silicon/carbon, silicon oxide, natural graphite, artificial graphite, lithium titanate, amorphous carbon and lithium metal; and/or
the positive electrode comprises a positive electrode active material, which is is selected from one of, or a mixture of more than one of, lithium cobalt oxide, lithium manganese oxide, lithium nickel manganese oxide, lithium nickel cobalt manganese oxide, lithium nickel cobalt aluminum oxide, lithium iron phosphate and lithium manganese iron phosphate.

12. A compound with the structure shown in formula (I): 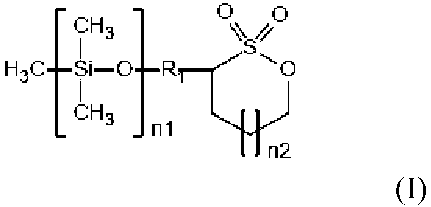 where R₁ is selected from C₀₋₅ alkylene; n1 is selected from integers 1 - 8; and n2 is selected from integers 0 - 5.

13. The compound as claimed in claim 12, used as a functional additive in an electrolyte that improves battery low-temperature performance.

14. A use of the compound as claimed in either claim 12 or claim 13 for improving battery low-temperature performance preferably, wherein improving battery low-temperature performance means increasing cycle life in low-temperature cycles, and/or increasing capacity retention in low-temperature discharge.

15. A method for preparing the compound as claimed in either claim 12 or claim 13, comprising the following steps:
step 1: dissolving trimethylsilyl chloride and trimethyl borate in a solvent, and slowly adding triethylamine dropwise to react;
step 2: removing triethylamine hydrochloride by filtration, and removing the solvent by vacuum distillation to obtain the intermediate tris(trimethylsilyl)borate (TMSP);
step 3: heating the TMSP with a cyclic sulfonic acid ester in a solvent to react, and purifying by column chromatography to obtain the compound.
